# EUROPEAN PATENT SPECIFICATION

(11) **EP 1 500 678 B1**
(45) Date of publication and mention of the grant of the patent: **12.05.2010**
(21) Application number: 03719120.2
(22) Date of filing: 17.04.2003
(51) Int. Cl.: C08L 9/00, C08L 7/00, C08K 9/04, B60C 5/14

(54) **RUBBER COMPOSITION FOR INNER LINER AND TIRE**
KAUTSCHUKZUSAMMENSETZUNG FÜR INNENSCHICHT UND REIFEN
COMPOSITION DE CAOUTCHOUC POUR GOMME INTERIEURE ET PNEU

(30) Priority: 18.04.2002 JP 2002115732
(43) Date of publication of application: 26.01.2005
(73) Proprietor: Bridgestone Corporation, Tokyo 104-8340 (JP)
(72) Inventor: ISHIDA, Kouji, c/o Bridgestone Corporation, Kodaira-shi, Tokyo 187-8531 (JP); FUJIKI, Kumi, c/o Bridgestone Corporation, Kodaira-shi, Tokyo 187-8531 (JP)
(74) Representative: Whalley, Kevin
(86) International application number: PCT/JP2003/004904
(87) International publication number: WO 2003/087214

(56) References cited:
- EP-A- 1 195 402
- JP-A- 5 017 641
- JP-A- 8 510 421
- JP-A- 11 140 234
- JP-A- 2000 080 207
- JP-A- 2000 080 207
- JP-A- 2000 160 024
- US-A- 2 979 470
- US-A- 5 925 702
- US-A- 6 034 164
- US-A- 6 034 164

## Description

The present invention relates to a rubber composition for inner liners, 3 and to a tire. More particularly, the present invention relates to a rubber composition for inner liners exhibiting excellent resistance to permeation of air and improved durability at low temperatures, and to a tire in which the rubber composition is used as the inner liner.

Heretofore, an inner liner layer composed of a rubber having small permeability of gases such as a halogenated butyl rubber is disposed on the inner face of a pneumatic tire so that leakage of air is prevented and the air pressure at the inside of the tire is kept constant. However, when the content of the butyl rubber is increased, strength of the unvulcanized rubber decreases, and problems arise in that fracture of the rubber and formation of holes in sheets tend to take place. In particular, the cord at the inner face tends to be exposed during production of the tire when the thickness of the inner liner is decreased.

It has been known that, when a great amount of carbon black or an inorganic filler having a great aspect ratio is mixed into a rubber composition containing butyl rubber such as a halogenated butyl rubber, durability at low temperatures deteriorates due to an increase in the hardness at low temperatures and workability in the mixing and rolling steps markedly deteriorates.

As the method for decreasing the thickness of the inner liner layer for the purpose of decreasing the weight of an automobile tire in response to the recent social requirement for energy saving, a method in which, for example, a plastic film or a film of a composition composed of a thermoplastic resin and an elastomer is used, is known. However, this method has drawbacks in that resistance to cracks and resistance to flex fatigue in the use at temperatures lower than 5°C are inferior to those of a layer of a conventional composition containing butyl rubber although the decrease in the weight of the tire can be achieved to some extent, and that the process for producing the tire is complicated.

In Japanese Patent Application Laid-Open No. 2000-80207, a rubber composition in which an organized lamellar clay mineral is dispersed for the purpose of improving the gas barrier property of a rubber is described. However, no description can be found of application to an inner liner.

In any case, it has been difficult to produce a rubber composition for inner liners satisfying both of the requirements for resistance to permeation of gases and durability at low temperatures, in accordance with a conventional method.

Attention is also drawn to the disclosures of US-6034164A; US-592572A; EP-1195402A; JP-11-140234A; JP-05-017641A; and US-2979470A.

Under the above circumstances, the present invention has an object of providing a rubber composition for inner liners which is used for an inner liner of a tire and exhibits, in particular, improved durability at low temperatures in combination with excellent resistance to permeation of air and a tire in which the above rubber composition is used as the inner liner.

As the result of intensive studies by the present inventors to achieve the above object, it was found that the object could be achieved by mixing a specific organized lamellar clay mineral with a specific rubber component. The present invention has been completed based on this knowledge.

The present invention provides a rubber composition for inner liners which comprises at least one rubber selected from diene-based synthetic rubbers and natural rubber having a glass transition temperature of -55°C or lower as the rubber component, a carbon black, and an organized swelling mica in an amount of 30 to 50 parts by weight per 100 parts by weight of the rubber component.

The diene-based synthetic rubber is preferably styrene-butadiene copolymer rubber.

The organized swelling mica is preferably a swelling mica organized with a dimethyldialkylammonium ion in which the alkyl group has 15 to 20 carbon atoms.

The rubber composition preferably has a brittle point at a low temperature of -40°C or lower.

The present invention also provides an inner liner comprising a rubber composition as described above; and a tire in which a rubber composition as described above is used as an inner liner.

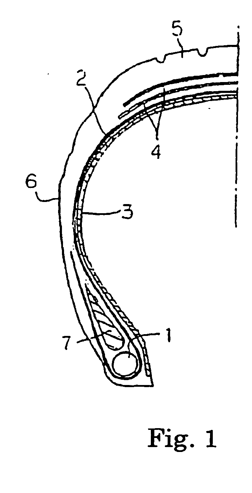

Figure 1 is a partial sectional view of an example of the pneumatic tire of the present invention.

In the rubber composition for inner liners of the present invention, a diene-based synthetic rubber or natural rubber (NR) having a glass transition temperature (Tg) of -55°C or lower is used as the rubber component. Preferable examples of the diene-based synthetic rubber include styrene-butadiene rubber (SBR), isoprene rubber (IR), butadiene rubber (BR), nitrile rubber (acrylonitrile-butadiene copolymers) (NBR) and hydrogenated nitrile rubber (H-NMR). The diene-based synthetic rubber may be used singly or in combination of two or more. Among these rubbers, styrene-butadiene rubber and nitrile rubber are preferable.

It is necessary that the glass transition temperature of the rubber component in the present invention be -55°C or lower since, when a rubber having Tg exceeding the above temperature is used, the brittle point of the rubber composition cannot be sufficiently decreased, and the durability at low temperatures as the inner liner cannot be surely exhibited. It is preferable that Tg is -60°C or lower.

It is preferable that the rubber composition comprises the diene-based synthetic rubber or the natural rubber having a glass transition temperature (Tg) of -55°C or lower in an amount of 30% by weight or more and more preferably 50% by weight or more based on the amount of the entire rubber component.

In the rubber composition of inner liners of the present invention, an organized swelling mica is mixed with the above rubber component. The organized swelling mica means a swelling mica mineral treated with an organic compound and, in particular, with an organic onium ion.

It is preferable that the swelling mica has the property of being swollen with organic solvents so that molecules of an organic onium salt described below can easily penetrate into the region between layers of (or intercalate) the mica. By using a swelling mica having the above swelling property, an organic onium salt can sufficiently penetrate into the region between layers of the mica. The region between the layers of the mica is further expanded by penetration of rubber molecules during mixing with the rubber, and the nano-order dispersion of the swelling mica in the rubber matrix can be achieved. From the above standpoint, swelling mica having a great average particle diameter is preferable. It is preferable that the average particle diameter of the mica is in the range of 3 to 30 µm.

The organized swelling mica can be obtained by treating with an organic onium salt, and in particular an ammonium salt is preferable among organic onium salts.

Examples of the organic onium ion used for organizing the swelling mica in the present invention include hexylammonium ion, octylammonium ion, 2-ethylhexylammonium ion, dodecylammonium ion, octadecylammonium ion, dioctyldimethylammonium ion, trioctylammonium ion, distearyldimethylammonium ion, trimethyloctadecylammonium ion, dimethylotadecylammonium ion, methyloctadecylammonium ion, trimethyldodecylammonium ion, dimethyldodecylammonium ion, methyldodecylammonium ion, trimethylhexadecylammonium ion, dimethylhexadecylammonium ion and methylhexadecylammonium ion.

Unsaturated organic onium ions such as 1-hexenylammonium ion, 1-dodecenylammonium ion, 9-octadecenylammonium ion (oleylammonium ion), 9,12-octadecadienylammonium ion (rinolammonium ion) and 9,12,15-octadecatrienylammonium ion (rinoleylammonium ion) can also be used.

Swelling mica organized with distrearyldimethylammonium ion is preferable.

The organized swelling mica can be obtained, for example, by dipping into an aqueous solution containing the organic onium ion, followed by washing with water to remove the excess amount of the organic onium ion.

The organized swelling mica obtained as described above is dispersed in the rubber in the form of nano-order fine particles when added to and mixed with the rubber component, and very effective improvement in the resistance to permeation of the air is made possible.

Due to the above effect, a rubber composition satisfying both of the requirements for resistance to permeation of the air and durability at low temperatures can be obtained by mixing the above organized swelling mica, in particular, with the rubber component having a glass transition temperature of -55°C or lower.

The rubber composition for inner liners of the present invention can comprise the organized swelling mica in an amount of 30 to 50 parts by weight per 100 parts by weight of the rubber component. When the amount is less than 30 parts by weight, there is the possibility that the effect of mixing the swelling mica is not sufficiently exhibited. When the amount exceeds 50 parts by weight, the hardness increases, and this occasionally causes a decrease in resistance to cracks at low temperatures.

The rubber composition of the present invention also includes carbon black, and may further comprise other chemicals conventionally used in the rubber industry which are, for example, oils, vulcanizing agents, vulcanization accelerators, antioxidants, scorch inhibitors, zinc oxide and stearic acid, in addition to the above compounding components as long as the object of the present invention is not adversely affected.

The brittle point of the rubber composition of the present invention at low temperatures is preferably -40°C or lower and more preferably -42°C or lower.

The rubber composition of the present invention obtained as described above is used as the rubber composition for inner liners of tires. The above rubber composition is extruded and processed as the material for the inner liner, and the tire of the present invention can be produced in accordance with the conventional process.

Figure 1 shows a partial sectional view of an example of the tire of the present invention. The tire comprises a bead core 1, a carcass layer 2 which comprises a carcass ply wound around one bead core 1 and disposed in a manner such that the cord direction is laid in the radial direction, an inner liner layer 3 which is disposed on the carcass layer at the inside in the radial direction of the tire, a belt portion comprising a belt layer 4 having two belts disposed on the crown portion of the carcass layer at the outside in the radial direction of the tire, a tread portion 5 disposed on the upper side of the belt portion and side wall portions 6 disposed at both sides of the tread portion. A bead filler 7 is disposed above one bead core 1.

In the tire having the above construction, the rubber composition of the present invention is applied to the inner liner layer 3 described above.

In the tire of the present invention, an inert gas such as the air and nitrogen gas can be used as the inflating gas.

The present invention will be described more specifically with reference to examples in the following. However, the present invention is not limited to the examples.

The evaluations of various physical properties were conducted in accordance with the following methods.

### (1) Glass transition temperature (Tg)

Using a differential scanning calorimeter (DSC) "RDC220", manufactured by SEIKO Co. Ltd., the measurement was conducted under the condition of a temperature elevation of 15°C/minute after cooling at -150°C. A tangent was drawn to the base lines before and after the jump of the DSC curve. The temperature on the DSC curve was read at the point corresponding to the middle of the two contact points and used as Tg.

### (2) Permeability of the air (resistance to permeation of the air)

The permeability of the air was measured at 60°C with a sample of each vulcanized rubber composition using an air permeation tester M-Cl (manufactured by TOYO SEIKI Co., Ltd.). The permeabilities of the air obtained in Example 1 and Comparative Examples 2 and 3 were expressed as indices using the result of Comparative Example 1 as the reference, which was set at 100. The smaller the index, the better the resistance to permeation of the air.

### (3) Brittleness at low temperatures

A test piece of each vulcanized rubber sample was prepared, and the test of impact brittleness was conducted in accordance with the test method of impact brittleness at low temperatures described in Japanese Industrial Standard K6301-1995.

### Examples 1 to 3 and Comparative Examples 1 to 3

Components (excluding sulfur) in the formulation shown in Table 1 were mixed at 110°C for 3 minutes and 45 seconds by a Brabender manufactured by TOYO SEIKI SEISAKUSHO Co., Ltd., and a mixture was obtained. After sulfur was added to the obtained mixture, the resultant mixture was mixed at 80°C for 1 minute and 30 seconds, and a rubber composition was obtained. The obtained rubber composition was vulcanized at 160°C using a mold of 0.4 mm for preparation of a sample for the test of the permeability of the air and using a mold of 2 mm for preparation of a sample for measurement of the S-S curve. The results of the evaluations are shown in Table 1.

**Table 1**

| Example | | | | 1 | 2 | 3 |
|---|---|---|---|---|---|---|
| Comparative Example | 1 | 2 | 3 | | | |
| Formulation (part by weight) | | | | | | |
| Br-IIR^{*1} | 80 | 80 | - | - | - | - |
| Nor ^{*2} | 20 | 20 | - | - | - | - |
| SBR ^{*3} | - | - | 100 | 100 | 100 | 100 |
| Carbon black ^{*4} | 60 | 30 | 70 | 30 | 30 | 30 |
| Oil ^{*5} | 10 | 10 | - | - | - | - |
| Stearic acid ^{*6} | 2.0 | 2.0 | 2.0 | 2.0 | 2.0 | 2.0 |
| Tackifier ^{*7} | 2.0 | 2.0 | - | - | - | - |
| Magnesium oxide ^{*8} | 0.3 | 0.3 | - | - | - | - |
| Organized mica (MAE-2) ^{*9} | - | - | - | 40 | - | - |
| Organized mica (MAE-5) ^{*10} | - | 40 | - | - | 40 | - |
| Organized mica (MAE-15) ^{*11} | - | - | - | - | - | 40 |
| Zinc oxide ^{*12} | 3.0 | 3.0 | 2.0 | 2.0 | 2.0 | 2.0 |
| Antioxidant ^{*13} | - | - | 1.0 | 1.0 | 1.0 | 1.0 |
| Vulcanization accelerator A ^{*14} | 1.3 | 1.3 | 0.4 | 0.4 | 0.4 | 0.4 |
| Vulcanization accelerator B ^{*15} | - | - | 0.3 | 0.3 | 0.3 | 0.3 |
| Vulcanization accelerator C ^{*16} | - | - | 0.8 | 0.8 | 0.8 | 0.8 |
| Sulfur ^{*17} | 0.5 | 0.5 | 1.3 | 1.3 | 1.3 | 1.3 |
| Permeability of the air (60°C) (index) | 100 | 60 | 270 | 112 | 87 | 80 |
| Brittle point at low temperature (°C) | -45 | -32 | -52 | -46 | -45.8 | -44.5 |

| | | | | | | |
|---|---|---|---|---|---|---|
| *1 Br-IIR: "EXXON BROMOBUTYL 2255"; manufactured by EXXON CHEMICAL Company; the glass transition temperature: -62°C. *2 NR: Natural rubber; the glass transition temperature: -62°C. *3 SBR: "TUFDENE 2000R"; manufactured by ASAHI KASEI Co., Ltd.; the glass transition temperature: -65°C. *4 Carbon black: "NPG"; manufactured by ASAHI CARBON Co., Ltd. *5 Oil: "DIANA PROCESS OIL NS-28"; manufactured by IDEMITSU KOSAN Co., Ltd. *6 Stearic acid: "PALMAC 1600"; manufactured by ACID CHEM Company. *7 Tackifier: "ESCOREZ 8180"; manufactured by EXXON CHEMICAL Company. *8 Magnesium oxide: manufactured by KAMISHIMA KAGAKU KOGYO Co., Ltd. *9 Organized mica (MAE-2): manufactured by CORP CHEMICAL Co. Ltd.; the average particle diameter: 2 µm. *10 Organized mica (MAE-5): manufactured by CORP CHEMICAL Co. Ltd.; the average particle diameter: 5 µm. *11 Organized mica (MAE-15): manufactured by CORP CHEMICAL Co. Ltd.; the average particle diameter: 15 µm. *12 Zinc oxide: "205P"; manufactured by MIDWEST ZINC Company. *13 Antioxidant: "VULKANOX 4020/LG"; manufactured by BAYER Company; N-phenyl-N'-1,3-dimethylbutyl-p-phenylenediamine. *14 Vulcanization accelerator A: "VULCACIT DM/MG"; manufactured by BAYER Company; dibenzothiazyl disulfide. *15 Vulcanization accelerator B: "VULCACIT D/EGC"; manufactured by BAYER Company; diphenylguanidine. *16 Vulcanization accelerator C: "CURE-RITE BBTS"; manufactured by BAYER Company. *17 Sulfur: sulfur powder; manufactured by TSURUMI KAGAKU KOGYO Co., Ltd. | | | | | | |

When the results in Examples 1 to 3 are compared with the results in Comparative Example 1 in which a conventional rubber containing butyl rubber as the main component was used, it is shown that approximately the same performance as those in Comparative Example 1 could be obtained in Examples 1 to 3 with respect to the resistance to permeation of the air and the resistance to brittleness at low temperature. The effect of the present invention was remarkably exhibited in Examples 2 and 3. In Comparative Example 2 in which organized mica was mixed with a rubber containing butyl rubber as the main component, the brittle point at low temperatures was elevated although the resistance to permeation of the air was improved, and the object of the present invention was not satisfied.

As described above, it was confirmed in the present invention that, when the inner liner comprising the specific diene-based rubber is used, mixing, in particular, swelling mica with the rubber is effective for surely obtaining the desired property of retaining the air and the durability at low temperatures.

In the present invention, a rubber composition for inner liners exhibiting excellent resistance to permeation of air and a low brittle point at low temperatures can be easily obtained by mixing an organized swelling mica having the property of being swollen with organic solvents with the diene-based synthetic rubber having a glass transition temperature of -55°C or lower. A tire in which this rubber composition is applied to the inner liner exhibited the excellent property of retaining the inflating gas and remarkably improved durability in use at very low temperatures such as in very cold areas.

## Claims

1. A rubber composition for inner liners which comprises at least one rubber selected from diene-based synthetic rubbers and natural rubber having a glass transition temperature of -55°C or lower as the rubber component, a carbon black, and an organized swelling mica in an amount of 30 to 50 parts by weight per 100 parts by weight of the rubber component.

2. A rubber composition for inner liners as claimed in claim 1, wherein the diene based synthetic rubber is styrene-butadiene copolymer rubber.

3. A rubber composition for inner liners as claimed in claim 1 or 2, wherein the organized swelling mica is a swelling mica organized with a dimethyldialkylammonium ion in which the alkyl group has 15 to 20 carbon atoms.

4. A rubber composition for inner liners as claimed in any of claims 1 to 3, wherein the rubber composition has a brittle point at a low temperature of -40°C or lower.

5. An inner liner comprising a rubber composition claimed in any of claims 1 to 4.

6. A tire in which the rubber composition claimed in any of claims 1 to 4 is used as an inner liner.

## Patentansprüche

1. Kautschukzusammensetzung für Zwischenlagen, die mindestens einen unter synthetischen Kautschuken auf Dienbasis und Naturkautschuk mit einer Glasübergangstemperatur von höchstens -55°C ausgewählten Kautschuk als Kautschukkomponente, einen Ruß und einen organisierten quellenden Glimmer in einem Anteil von 30 bis 50 Gewichtsteilen pro 100 Gewichtsteile der Kautschukkomponente aufweist.

2. Kautschukzusammensetzung für Zwischenlagen nach Anspruch 1, wobei der synthetische Kautschuk auf Dienbasis Styrol-Butadien-Copolymer-Kautschuk ist.

3. Kautschukzusammensetzung für Zwischenlagen nach Anspruch 1 oder 2, wobei der organisierte quellende Glimmer ein mit einem Dimethyldialkylammonium-Ion organisierter quellender Glimmer ist, in dem die Alkylgruppe 15 bis 20 Kohlenstoffatome aufweist.

4. Kautschukzusammensetzung für Zwischenlagen nach einem der Ansprüche 1 bis 3, wobei die Kautschukzusammensetzung einen Sprödigkeitspunkt bei einer tiefen Temperatur von -40°C oder niedriger aufweist.

5. Zwischenlage, die eine Kautschukzusammensetzung nach einem der Ansprüche 1 bis 4 aufweist.

6. Reifen, in dem die Kautschukzusammensetzung nach einem der Ansprüche 1 bis 4 als Zwischenlage verwendet wird.

## Revendications

1. Composition de caoutchouc pour des gommes intérieures qui comprend au moins un caoutchouc choisi parmi des caoutchoucs synthétiques à base de diène et un caoutchouc naturel possédant une température de transition vitreuse de -55°C ou inférieure à celle du composant de caoutchouc, un noir de carbone et un mica gonflant organisé dans une quantité de 30 à 50 parties en poids pour 100 parties en poids du composant de caoutchouc.

2. Composition de caoutchouc pour des gommes intérieures selon la revendication 1, dans laquelle le caoutchouc synthétique à base de diène est un caoutchouc de copolymère de styrène-butadiène.

3. Composition de caoutchouc pour des gommes intérieures selon la revendication 1 ou 2, dans laquelle le mica gonflant organisé est un mica gonflant organisé avec un ion diméthyldialkylammonium dans lequel le groupe alkyle possède de 15 à 20 atomes de carbone.

4. Composition de caoutchouc pour des gommes intérieures selon l'une quelconque des revendications 1 à 3, où la composition de caoutchouc présente un point de fragilité à une basse température de -40°C ou moins.

5. Gomme intérieure comprenant une composition de caoutchouc selon l'une quelconque des revendications 1 à 4.

6. Pneu dans lequel la composition de caoutchouc selon l'une quelconque des revendications 1 à 4 est utilisée en tant que gomme intérieure.
